# EUROPÄISCHE PATENTSCHRIFT

(11) **EP 3 528 955 B1**
(45) Veröffentlichungstag und Bekanntmachung des Hinweises auf die Patenterteilung: **09.12.2020**
(21) Anmeldenummer: 17790706.0
(22) Anmeldetag: 11.10.2017
(51) Int. Cl.: B02C 21/02, B02C 23/02

(54) **SELBSTVERRIEGELNDER AUFGABETRICHTER**
SELF-LOCKING CHARGING HOPPER
TRÉMIE D'ALIMENTATION À VERROUILLAGE AUTOMATIQUE

(30) Priorität: 18.10.2016 DE 102016119797
(43) Veröffentlichungstag der Anmeldung: 28.08.2019
(73) Patentinhaber: Kleemann GmbH, 73037 Göppingen (DE)
(72) Erfinder: WELLER, Christian, 73312 Geislingen (DE)
(74) Vertreter: Herrmann, Jochen
(86) Internationale Anmeldenummer: PCT/EP2017/075927
(87) Internationale Veröffentlichungsnummer: WO 2018/073068

(56) Entgegenhaltungen:
- EP-A1- 2 949 397
- EP-A2- 2 664 492
- EP-A2- 2 730 459
- GB-A- 2 496 522

## Beschreibung

Die Erfindung betrifft eine Aufgabeeinheit einer Material-Verarbeitungseinrichtung mit einem Aufgabetrichter mit zumindest einer schwenkbar gelagerten Seitenwand und mit einer schwenkbar gelagerten Rückwand, wobei die Seitenwand und die Rückwand mittels Aktuatoren zwischen einer abgeklappten Transportstellung und einer aufgeklappten Arbeitsstellung schwenkbar sind, wobei in der Arbeitsstellung mindestens eine Seitenwand mit der Rückwand mittels zumindest eines lösbaren Verschlusses verbunden ist und wobei der Verschluss mittels einer Bewegung der Seitenwand oder der Rückwand verriegelbar oder entriegelbar ist.

Ein solcher Aufgabetrichter ist aus der EP 2949397 A1 bekannt. Der Aufgabetrichter ist aus zwei gegenüberliegend angeordneten Seitenwänden und einer die Seitenwände rückseitig verbindenden Rückwand gebildet. Sowohl die Seitenwände als auch die Rückwand sind drehbar mit einem Chassis einer Material-Verarbeitungseinrichtung verbunden. Sie können so zwischen einer abgeklappten Transportstellung und einer aufgeklappten Arbeitsstellung geschwenkt werden. Aufgeklappt bilden die Seitenwände und die Rückwand einen Aufgabetrichter aus, über den aufzubereitendes Material der Material-Verarbeitungseinrichtung zugeführt werden kann. In dieser Position sind die Seitenwände mit der Rückwand über Verschlusselemente verbunden. Die Verstellung der Seitenwände und der Rückwand zwischen der Transportstellung und der Arbeitsstellung erfolgt mittels zwischen dem Chassis und den Wänden wirkenden Aktuatoren. Für die Rückwand oder alternativ dazu für die Seitenwände ist neben der Drehbewegung eine lineare Bewegung vorgesehen. Diese ermöglicht es, die Rückwand oder die Seitenwände in ihrer aufgeklappten Stellung linear zu verschieben. Die Verschlusselemente sind so ausgeführt, dass sie mittels der linearen Verschiebung der Rückwand oder der Seitenwände ineinandergreifen oder sich lösen. Zum Verschließen des Aufgabetrichters wird beispielsweise zunächst die Rückwand aufgeklappt und mittels der linearen Verstellung angehoben. Anschließend werden die Seitenwände aufgeklappt. In dieser Stellung stehen die an der Rückwand angebrachten Verschlusselemente und die an den Seitenwänden angebrachten Verschlusselemente übereinander. Durch Absenken der Rückwand greifen die Verschlusselemente ineinander. Die Seitenwände und die Rückwand sind dadurch fest miteinander verbunden, sodass sie auch bei Ausfall eines Aktuators nicht in ihre Transportstellung zurückfallen. Um den Aufgabetrichter zurück in seine Transportstellung zu verstellen wird zunächst die Rückwand angehoben und die Seitenwände nach unten geklappt. Anschließend wird die Rückwand linear nach unten verstellt und danach in ihre Transportposition geklappt.

Nachteilig werden für die Durchführung der Drehbewegung und die Linearbewegung der Rückwand oder alternativ einer Seitenwand zwei Aktuatoren, beispielsweise in Form von Hydraulikzylindern, benötigt. Diese sind so auszulegen, dass sie jeweils das Gewicht der Rückwand bzw. der Seitenwand tragen können. Es sind entsprechend leistungsstarke und damit teure Aktuatoren vorzusehen. Weiterhin muss der Bewegungsablauf der Aktuatoren genau aufeinander abgestimmt sein, was einer entsprechenden Steuerung bedarf.

Es ist daher Aufgabe der Erfindung, eine Aufgabeeinheit bereitzustellen, welche bei einem verringerten Bauteile- und damit Kostenbedarf einen selbstverriegelten Aufgabetrichter aufweist.

Die Aufgabe der Erfindung wird dadurch gelöst, dass jeweils ein erster Aktuator zu Verstellung der Rückwand und ein zweiter Aktuator zur Verstellung der Seitenwand vorgesehen ist und dass zumindest ein Umlenkglied vorgesehen ist, welches die Bewegung des ersten Aktuators während eines Teilabschnitts der Bewegung in eine rotatorische Bewegung der Rückwand und während eines weiteren Teilabschnitts in eine translatorische Bewegung der Rückwand umwandelt oder dass das Umlenkglied die Bewegung des zweiten Aktuators während eines Teilabschnitts der Bewegung in eine rotatorische Bewegung der Seitenwand und während eines weiteren Teilabschnitts in eine translatorische Bewegung der Seitenwand umwandelt. Durch das Umlenkglied wird es ermöglicht, mit einem einzelnen Aktuator sowohl die Drehbewegung zum Aufstellen oder Abklappen der Seitenwand oder der Rückwand wie auch deren lineare Bewegung zum Entriegeln und zum Verriegeln der Seitenwand mit der Rückwand zu bewirken. Es kann somit gegenüber bekannten, selbstverriegelnden Aufgabetrichtern ein Aktuator eingespart werden. Die Drehbewegung und die translatorische Bewegung erfolgen innerhalb vorgegebener Stellbereiche des Aktuators und sind durch das Umlenkglied mechanisch vorgegeben. Es müssen somit vorteilhaft nicht die Bewegungsabläufe zweier Aktuatoren durch geeignete Ansteuerung aufeinander abgestimmt werden. Dadurch werden die Zuverlässigkeit und die Eigensicherheit des Systems erhöht.

Ein einfacher, kostengünstiger und mechanisch stark belastbarer Aufbau des Umlenkglieds kann dadurch erreicht werden, dass das Umlenkglied eine Linearführung aufweist, in welcher die Rückwand oder die Seitenwand linear beweglich und drehbar gelagert ist. Wirkt ein Aktuator auf die in dem Umlenkglied gelagerte Rückwand bzw. Seitenwandein, so erfolgt zunächst eine translatorische Bewegung, bis das Ende der Linearführung erreicht ist. Bei einem weiteren Einwirken des Aktuators folgt ab dann die Rotationsbewegungen der Rückwand bzw. Seitenwand.

Die rotatorische und die translatorische Bewegung können dadurch ermöglicht werden, dass der Aktuator derart drehbar mit der Rückwand oder der Seitenwand verbunden ist, dass eine lineare Verstellrichtung des Aktuators seitlich beabstandet zu einer Drehachse der Rückwand oder der Seitenwand ausgerichtet ist und dass eine Kraftkomponente der von dem Aktuator auf die Rückwand oder die Seitenwand übertragenen Kraft in Richtung der Linearführung ausgerichtet ist. Dadurch, dass die Krafteinwirkung seitlich der Drehachse erfolgt, ist ein Hebel gebildet, welcher zu einer Drehbewegung der Rückwand bzw. der Seitenwand führt. Die in Richtung der Linearführung wirkende Kraftkomponente führt hingegen zur linearen Verstellung der Rückwand bzw. Seitenwand.

Die Verriegelung der Rückwand mit der Seitenwand erfolgt durch die translatorische Bewegung zumindest einer der beiden Wände. Ist es vorgesehen, dass die Linearführung in ihrer Längserstreckung in Richtung einer Komponente der wirkenden Schwerkraft ausgerichtet ist, so wird die Seitenwand bzw. Rückwand bei nicht wirkendem Aktuator durch die Schwerkraft entlang der Linearführung in ihre untere Position gedrückt. Dies entspricht der Verriegelungsposition. Die Seitenwand und die Rückwand bleiben somit auch bei Ausfall eines Aktuators miteinander verbunden. Sie können nicht von ihrer Arbeitsstellung in die Transportstellung fallen. Dadurch wird das Unfallrisiko deutlich reduziert.

Entsprechend einer bevorzugten Ausgestaltungsvariante der Erfindung kann es vorgesehen sein, dass der Verschluss aus einer Verschlussaufnahme und einem Verschlusseinsatz gebildet ist und dass durch die translatorische Bewegung der Rückwand oder der Seitenwand der Verschlusseinsatz zum Verriegeln der Rückwand mit der Seitenwand in Richtung einer Komponente der Schwerkraft in den Verschlusseinsatz einführbar und zum Entriegeln entgegen der Komponente der Schwerkraft aus der Verschlussaufnahme anhebbar ist. Die Verbindung zwischen der Seitenwand und der Rückwand bleibt dadurch unabhängig von einem Ausfall eines Aktuators durch die Schwerkraft geschlossen. Dazu ist es vorteilhaft, wenn auch die Linearführung in Richtung einer Komponente der Schwerkraft ausgerichtet ist.

Vorteilhaft kann es vorgesehen sein, dass die Verschlussaufnahme und der Verschlusseinsatz selbstzentrierend zueinander ausgebildet sind, insbesondere dass die Verschlussaufnahme als halbkugelförmige Pfanne und der Verschlusseinsatz als Kugel oder Kugelabschnitt ausgeführt sind oder dass der Verschlusseinsatz als Kegel und die Verschlussaufnahme als kegelförmige Aufnahme ausgebildet sind. Es wird so ein selbstfindender Verschluss gebildet, der dazu führt, dass die Seitenwand und die Rückwand auch bei größeren auftretenden Toleranzen beim Verriegeln in eine exakte Position zueinander ausgerichtet werden. Die Kombination einer Kugel bzw. eines Kugelabschnitts mit der halbkugelförmigen Pfanne stellt einen mechanisch sehr robusten Verschluss dar. Mit einem aus einem Kegel und einer kegelförmige Aufnahme gebildeten Verschluss können sehr hohe Schließkräfte erzeugt werden.

Ein sicheres Eingreifen des Verschlusseinsatzes in die Verschlussaufnahme kann dadurch erreicht werden, dass der Verschlussaufnahme ein über die Verschlussaufnahme hervorstehendes Führungselement zugeordnet ist und dass das Führungselement eine geneigt zur Linearbewegung des Verschlusseinsatzes und zur Verschlussaufnahme hin verlaufende Führungsfläche aufweist. Das Führungselement lenkt den Verschlusseinsatz beim Verriegeln zur Verschlussaufnahme. Eine solche Ausgestaltung stellt sicher, dass der Verschlusseinsatz stets zuverlässig in die Verschlussaufnahme einfährt, insbesondere auch dann, wenn beispielsweise auf die Rückwand eine Trichtererweiterung aufgesetzt ist, die zu einer Verlagerung des Gesamtschwerpunkts führt oder wenn die Maschine schräg am Hang steht.

Der durch den Aktuator auf die Seiten- bzw. Rückwand übertragenen Kraft ist die Schwerkraft überlagert. Weiterhin kann der Schwerpunkt beabstandet zu der durch den Aktuator vorgegebenen Wirklinie liegen. Wenn nun während der Verstellbewegung von der Arbeitsstellung in die Transportstellung der Schwerpunkt auf seinem Verfahrweg die Wirklinie kreuzt, kann es zu einer instabilen Lage der Rückwand oder der Seitenwand auf einem kleinen Teil ihrer Verstellbewegung kommen. Um ein hartes Umschlagen der Rück-/Seitenwand zu dämpfen, kann es vorgesehen sein, dass an der in dem Umlenkglied gelagerten Rückwand oder Seitenwand ein Federelement derart angreift, dass ein in Richtung der Arbeitsstellung wirkendes Drehmoment auf die Rückwand oder die Seitenwand übertragen wird. Das von dem Federelement eingebrachte Drehmoment ist bei aufgerichteter Seiten- bzw. Rückwand vorzugsweise größer als das durch die Gewichtskraft bewirkte Drehmoment, so dass in Summe ein in Richtung der Arbeitsstellung wirkendes Drehmoment verbleibt.

Eine konstruktiv einfache und kostengünstige Lösung zum Einbringen des Drehmomentes durch das Federelement kann dadurch bereitgestellt werden, dass die Rückwand oder die Seitenwand mittels eines Führungsbolzens in der Linearführung gelagert ist und dass das Federelement an dem Führungsbolzen derart angekoppelt ist, dass eine in Richtung der Längserstreckung der Linearführung gerichtete Kraft auf den Führungsbolzen übertragen wird, welche ein um den Montagepunkt des Aktuators an der Rückwand oder der Seitenwand wirkendes Drehmoment erzeugt. Das Federelement wirkt dabei vorzugsweise in Richtung einer Komponente der Schwerkraft. Dadurch bringt das Federelement auf einer Seite des Montagepunktes des Aktuators eine Kraft ein, während der Schwerpunkt der Seiten- oder Rückwand auf der gegenüberliegenden Seite des Montagepunktes angeordnet ist. Die bewirkten Drehmomente sind entsprechend gegenläufig ausgerichtet. Durch geeignete Auslegung der Federkraft erfährt die Rück- bzw. Seitenwand ein resultierendes, in Richtung ihrer Arbeitsstellung wirkendes Drehmoment.

Eine hohe mechanische Belastbarkeit des Aufgabetrichters kann dadurch erreicht werden, dass die schwenkbar gelagerte Seitenwand in ihrer aufgeklappten Arbeitsstellung mittels zumindest einer Stützstrebe abgestützt ist und dass die schwenkbar und linear bewegliche Rückwand durch den Verschluss an der Seitenwand gehalten ist oder dass die schwenkbar gelagerte Rückwand in ihrer aufgeklappten Arbeitsstellung mittels zumindest einer Stützstrebe abgestützt ist und dass die schwenkbar und linear bewegliche Seitenwand durch den Verschluss an der Rückwand gehalten ist. Die Stützstrebe stützt die Rück- bzw. Seitenwand vorzugsweise gegen ein Chassis der Material-Verarbeitungseinrichtung ab. Damit können hohe Kräfte, wie sie beim Bestücken der Aufgabeeinheit auftreten, an das Chassis abgeleitet werden. Die translatorisch und rotatorisch gelagerte Rück- bzw. Seitenwand ist durch den Verschluss mit der durch die Stützstrebe abgestützten Seiten- bzw. Rückwand verbunden und dadurch in ihrer Position mechanisch belastbar festgelegt. Vorzugsweise ist der Verschluss derart ausgelegt, dass er hohe Kräfte übertragen kann.

Um den Aktuator vor Beschädigungen zu schützen kann es vorgesehen sein, dass die Stützstrebe ein U-förmiges Profil aufweist und dass in der Arbeitsstellung des Aufgabetrichters zumindest einer der Aktuatoren zumindest teilweise von der Stützstrebe umgeben ist.

Eine belastbare Verbindung zwischen der Rückwand und der Seitenwand kann dadurch erreicht werden, dass der Verschluss zwischen den in Arbeitsstellung oberen einander zugewandten Enden der Rückwand und der Seitenwand angeordnet ist.

Die Erfindung wird im Folgenden anhand eines in den Zeichnungen dargestellten Ausführungsbeispiels näher erläutert. Es zeigen:
- Figur 1: in einer perspektivischen Seitenansicht eine mobile Material-Verarbeitungseinrichtung mit einer Aufgabeeinheit mit einem Aufgabetrichter in seiner Arbeitsstellung,
- Figur 2: den in Figur 1 gezeigten Aufgabetrichter in seiner Transportposition,
- Figur 3: den in Figur 2 gezeigte Aufgabetrichter mit einer linear angehobenen Rückwand,
- Figur 4: den in Figur 3 gezeigten Aufgabetrichter mit einer aufgeklappten und linear angehobenen Rückwand,
- Figur 5: einen Ausschnitt des in Figur 4 gezeigten Aufgabetrichters mit aufgeklappten Seitenwänden und
- Figur 6: den in Figur 5 gezeigten Ausschnitt des Aufgabetrichters mit abgesenkter Rückwand.

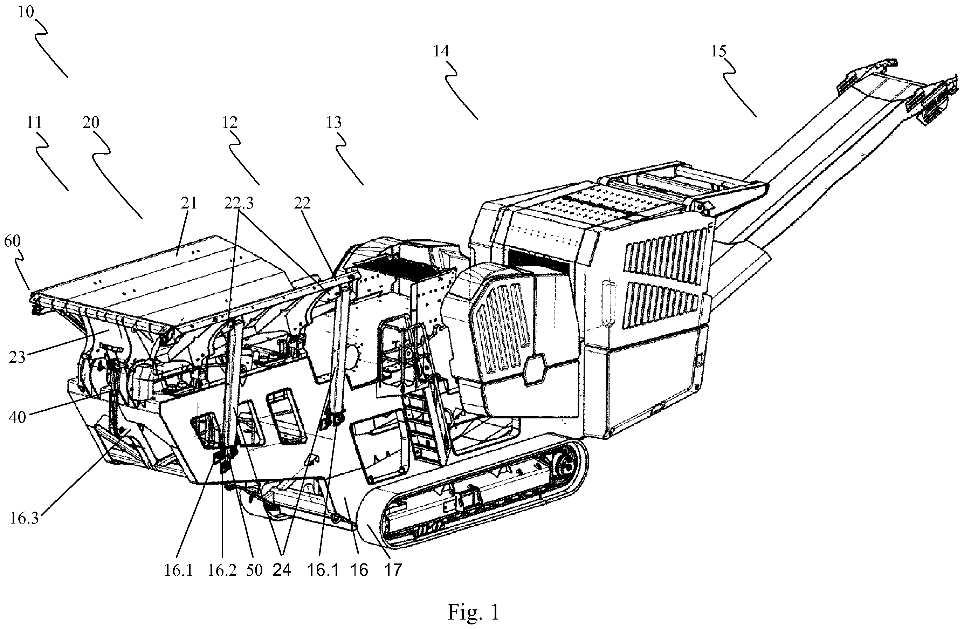

Figur 1 zeigt einer perspektivischen Seitenansicht eine mobile Material-Verarbeitungseinrichtung 10 mit einer Aufgabeeinheit 11 mit einem Aufgabetrichter 20 in seiner Arbeitsstellung. Die Erfindung kann auch für stationäre Material-Verarbeitungseinrichtungen 10 verwendet werden.

Der Aufgabeeinheit 11 nachfolgend sind eine nachfolgende Vorabsiebung 12, ein Brecher 13, eine Antriebseinheit 14 und ein Förderband 15 angeordnet, welche an einem Chassis 16 der Material-Verarbeitungseinrichtung 10 befestigt sind. Die Material-Verarbeitungseinrichtung 10 kann mittels eines Kettenantriebs 17 eigenständig fahren.

Dem Aufgabetrichter 20 sind zwei gegenüberliegend angeordnete Seitenwände 21, 22 sowie eine Rückwand 23 zugeordnet. Die Seitenwände 21, 22 und die Rückwand 23 sind zum Inneren des Aufgabetrichters 20 gewölbt ausgeführt. Dabei schließen die Seitenwände 21, 22 den Aufgabetrichter 20 zur Seite hin ab. Die Rückwand 23 schließt den Aufgabetrichter 20 auf der der Vorabsiebung 12 abgewandten Seite ab. Die Seitenwände 21, 22 sind jeweils mittels eines Verschlusses 60 mit der Rückwand 23 verbunden. Zur Vorabsiebung 12 hin ist der Aufgabetrichter 20 geöffnet.

Figur 1 zeigt die Aufgabeeinheit 11 in ihre Arbeitsstellung. Dabei sind die schwenkbar gelagerten Seitenwände 21, 22 und die schwenkbar gelagerte Rückwand 23 mittels Aktuatoren 40, 50 nach oben geklappt. Als Aktuatoren 40, 50 sind Hydraulikzylinder vorgesehen. Sie sind beweglich an dem Chassis 16 und an der Rückwand 23 bzw. den Seitenwänden 21, 22 befestigt. Dazu sind an dem Chassis 16 ein seitliches Aktuatorgegenlager 16.2 und ein rückseitiges Aktuatorgegenlager 16.3 angeordnet. In der Arbeitsstellung sind die Seitenwände 21, 22 durch Stützstreben 24 gegen das Chassis 16 abgestützt. Die Stützstreben 24 sind lösbar an unteren Stützenaufnahmen 16.1, welche an dem Chassis 16 befestigt sind, montiert. Gegenüberliegend sind die Stützstreben 24 schwenkbar an oberen Stützenaufnahmen 22.3, welche jeweils an den Seitenwänden 21, 22 angeordnet sind, befestigt. Vorliegend sind die Stützstreben 24 als U-Profile ausgeführt. In der Arbeitsstellung ist der seitliche zweite Aktuator 50 durch das U-Profil der zugeordneten Stützstreben 24 überdeckt. Dadurch ist der zweite Aktuator 50 vor Beschädigungen geschützt angeordnet.

In der Arbeitsstellung kann der Material-Verarbeitungseinrichtung 10 zu zerkleinerndes Material, beispielsweise Gestein, über den Aufgabetrichter 20 der Aufgabeeinheit 11 zugeführt werden. Das Material wird zu der Vorabsiebung 12 und von dort zu dem Brecher 13 geleitet. Im Brecher 13 wir das Material auf die gewünschte Größe zerkleinert und über das Förderband 15 abtransportiert. Die einzelnen Aggregate werden über die Antriebseinheit 14 angetrieben.

Die Seitenwände 21, 22 sind durch die Stützstreben 24 an dem Chassis 16 abgestützt. Dadurch können auch hohe Kräfte, beispielsweise beim Beladen der Aufgabeeinheit 11 mit großen Gesteinsbrocken, an das Chassis 16 abgeleitet werden, ohne dass der zweite Aktuator 50 belastet wird. Die Rückwand 23 ist durch die Verschlüsse 60 mit den Seitenwänden 21, 22 verbunden, sodass auch auf die Rückwand 23 einwirkende Kräfte sicher abgefangen und an das Chassis 16 weitergeleitet werden.

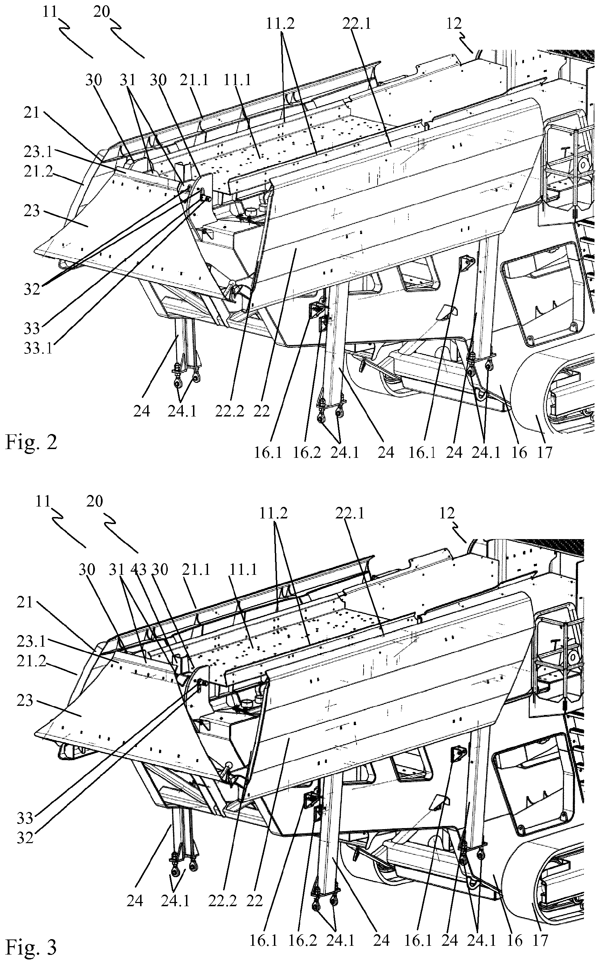

Figur 2 zeigt den in Figur 1 gezeigten Aufgabetrichter 20 in seiner Transportposition. Die Seitenwände 21, 22 und die Rückwand 23 sind mit Hilfe der Aktuatoren 40, 50 nach unten geklappt. Dazu wurden die Stützstreben 24 von den unteren Stützenaufnahmen 16.1 gelöst. Zum Verbinden der Stützstreben 24 mit den unteren Stützenaufnahmen 16.1 sind endseitig an den Stützstreben 24 Befestigungsösen 24.1 angebracht, durch welche ein entsprechender Befestigungsbolzen geschoben werden kann.

Durch die abgeklappten Seitenwände 21, 22 und die abgeklappte Rückwand 23 ist der Blick auf eine Vibrations-Aufgaberinne 11.1 der Aufgabeeinheit 11 freigegeben. In Arbeitsstellung wird durch die Vibrations-Aufgaberinne 11.1 das der Aufgabeeinheit 11 zugeführte Material zur Vorabsiebung 12 transportiert. Die Vibrations-Aufgaberinne 11.1 ist seitlich von Seitenschienen 11.2 begrenzt. Die Seitenschienen 11.2 sind derart ausgelegt, dass sie bei aufgeklappten Seitenwänden 21, 22 von Einleitblechen 21.1, 22.1 umfasst werden. Die Einleitbleche 21.1, 22.1 sind entlang den der Vibrations-Aufgaberinne 11.1 zugewandten Längsseiten der Seitenwände 21, 22 mit diesen verbunden. Durch diese Anordnung der Einleitbleche 21.1, 22.1 und der Seitenschienen 11.2 ist sichergestellt, dass dem in Arbeitsposition verstellten Aufgabetrichter 20 zugeführtes Material auf die Vibrations-Aufgaberinne 11.1 geleitet wird und nicht seitlich davon vorbeifällt. An den der Rückwand 23 zugewandten Enden der Seitenwände 21, 22 sind abgewinkelt zu den Seitenwänden 21, 22 ausgerichtete Abkantungen 21.2, 22.2 angebracht. Diese sind in Arbeitsstellung des Aufgabetrichters 20 von innen entlang der äußeren Kanten der Rückwand 23 geführt. Sie überbrücken so jeweils einen möglichen, zwischen der Rückwand 23 und den Seitenwänden 21, 22 gebildeten Spalt. Dadurch kann auch hier kein der Aufgabeeinheit 11 zugeführtes Material aus dem Aufgabetrichter 20 fallen.

In dem gezeigten Ausführungsbeispiel sind die Seitenwände 21, 22 schwenkbar mit dem Chassis 16 verbunden. Die Lagerung der Rückwand 23 ermöglicht eine Rotationsbewegungen und eine Linearbewegung. Dazu ist ein entsprechend ausgelegtes Umlenkglied vorgesehen. Das Umlenkglied weist vorliegend zwei äußere Haltestege 30 und zwei zwischen diesen beabstandet angeordnete innere Haltestege 31 auf. Die Haltestege 30, 31 sind plattenförmig ausgebildet. Sie sind in Richtung der Längserstreckung der Vibrations-Aufgaberinne 11.1 ausgerichtet mit dem Chassis 16 verbunden. In die Haltestege 30, 31 sind Linearführungen 32 in Form von Langlöchern eingebracht. Die Linearführungen 32 sind vertikal und damit in Richtung der wirkenden Schwerkraft ausgerichtet. In den Linearführungen 32 sind Führungsbolzen 33 gelagert. Dabei ist jeweils ein Führungsbolzen 33 von einem äußeren Haltesteg 30 zu einem benachbarten inneren Haltesteg 31 geführt. Jeweils ein Führungsbolzen 33 ist somit drehbar und linear verstellbar in den Linearführungen 32 zweier gegenüberstehender äußerer und innerer Haltestege 30, 31 gelagert. Die Rückwand 23 ist jeweils zwischen dem äußeren und dem inneren Haltesteg 30, 31 mit dem Führungsbolzen 33 verbunden. Dadurch wird sowohl eine rotatorische als auch eine translatorische Bewegung der Rückwand 20 ermöglicht. In der Transportstellung ist die Rückwand nach unten geklappt und die Führungsbolzen 33 befinden sich am unteren Ende der Linearführung 32. Seitlich neben den äußeren Haltestegen 30 weisen die Führungsbolzen 33 jeweils eine umlaufende Nut 33.1 auf.

In diese ist jeweils eine nicht dargestellte Zugfeder eingehängt. Gegenüberliegend sind die Zugfedern mit dem Chassis 16 derart verbunden, dass sie eine in Richtung der Längserstreckung der Linearführungen 32 und in Richtung zumindest einer Komponente der Schwerkraft wirkende Kraft auf die Führungsbolzen 33 übertragen. Die Zugfeder zieht die Führungsbolzen 33 somit in ihre gezeigte untere Position der Linearführung 32.

An ihrem inneren Ende weist die Rückwand 23 einen quer verlaufenden Abschluss 23.1 auf. In Arbeitsposition ist dieser unmittelbar an die Vibrations-Aufgaberinne 11.1 herangeführt, sodass auch hier kein in den Aufgabetrichter 20 eingeführtes Material von der Vibrations-Aufgaberinne 11.1 fallen kann.

Durch die in ihre Transportstellung abgeklappten Seitenwände 21, 22 und Rückwand 23 sind sowohl die Gesamthöhe wie auch die Gesamtbreite der Material-Verarbeitungseinrichtung 10 gegenüber ihrer Arbeitsstellung deutlich reduziert. Dies ermöglicht einen Transport der Material-Verarbeitungseinrichtung 10 auf öffentlichen Verkehrswegen.

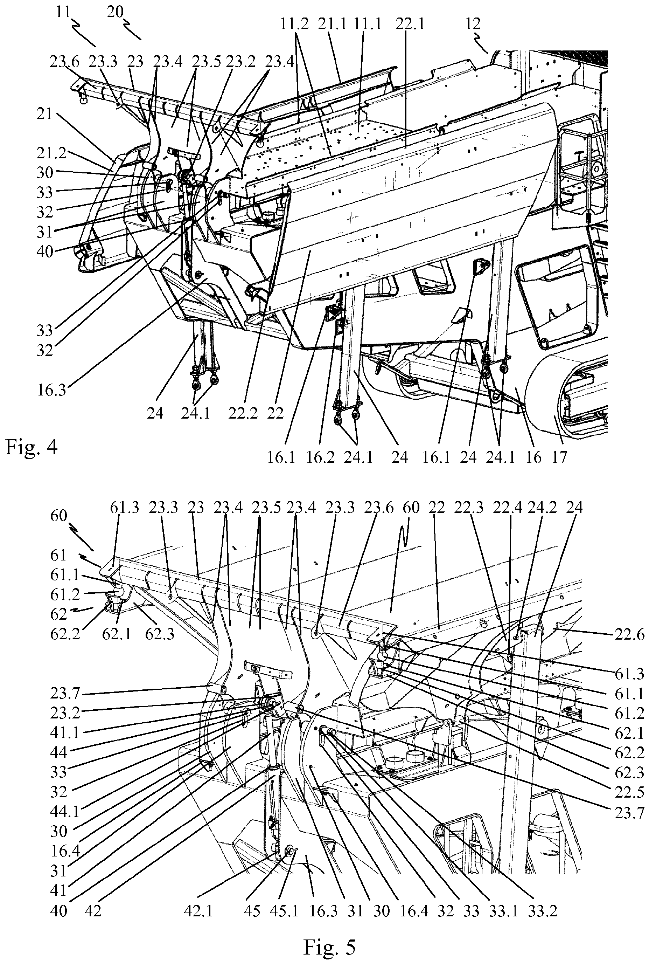

In Figur 3 ist der in Figur 2 gezeigte Aufgabetrichter 20 mit einer gegenüber der in Figur 2 gezeigten Transportstellung linear angehobenen Rückwand 23 dargestellt. Dies entspricht dem ersten Bewegungsschritt bei der Verstellung des Aufgabetrichters 20 von seiner Transportstellung in die Arbeitsstellung. Um diese angehobenen Position zu erreichen wird der erste Aktuator 40 entsprechend ausgefahren. Wie zu Figur 1 und genauer in den Figuren 4, 5 und 6 gezeigt, ist der erste Aktuator 40 an einer Seite um eine erste Drehachse drehbar an dem Chassis 16 festgelegt. Gegenüberliegend ist der erste Aktuator 40 um eine zweite Drehachse drehbar an der Außenseite der Rückwand 23 gelagert. Die beiden Drehachsen sind dabei gleich ausgerichtet. Der Angriffspunkt des Aktuators 40 liegt zwischen der durch die Führungsbolzen 33 gebildeten Schwenkachse und dem Schwerpunkt der Rückwand 23. Die Bewegung des Aktuators 40 führt daher in ihrem ersten Teilabschnitt, der durch die Länge der Linearführung 32 begrenzt ist, zu einer translatorischen Bewegung der Rückwand 23.

Figur 4 zeigt den in Figur 3 gezeigten Aufgabetrichter 20 mit einer aufgeklappten und linear angehobenen Rückwand 23. Die Seitenwände 21, 22 befinden sich weiterhin in ihrer Transportstellung.

Auf der jetzt sichtbaren Außenseite der Rückwand 23 sind zur Verstärkung äußere und innere Strebenpaare 23.4, 23.5 angebracht, vorzugsweise aufgeschweißt. Der von den Führungsbolzen 33 abgewandte Rand 23.6 der Rückwand 23 ist ebenfalls zur Verstärkung nach außen umgebogen. In den umgebogenen Rand 23.6 sind Schlitze eingebracht, in welche die Enden der Strebenpaare 23.4, 23.5 eingeführt sind. Weiterhin sind Hebeösen 23.3 in benachbarten Schlitzen angebracht und dort mit dem umgebogenen Rand 23.6 verbunden, vorzugsweise verschweißt.

Der als Hydraulikzylinder ausgeführte erste Aktuator 40 der Rückwand 23 ist zwischen dem rückseitigen Aktuatorgegenlager 16.3 und einem rückseitigen Aktuatorlager 23.2 wirksam. Das rückseitige Aktuatorlager 23.2 ist zwischen den inneren Strebenpaaren 23.5 angeordnet. Wie bereits zu Figur 3 ausgeführt, sind die Drehachsen des rückseitigen Aktuatorgegenlagers 16.3 und des rückseitigen Aktuatorlagers 23.2 gleich ausgerichtet.

Die aufgeklappte und linear angehobene Position der Rückwand 23 wird, ausgehend von der in Figur 3 gezeigten angehobenen Position, durch weiteres Ausfahren des Aktuators 40 erreicht. In der in Figur 3 gezeigten angehobenen Position liegen die Führungsbolzen 33 am oberen Ende der durch die Langlöcher gebildeten Linearführung 32 an. Die weitere Expansion des Aktuators 40 führt somit zu einer Drehbewegung der Rückwand 23 um die durch die Führungsbolzen 33 gebildete Drehachse. Die rotatorische Bewegung erfolgt vorzugsweise bis zu einem Anschlag. Bezogen auf die Drehbewegung entspricht dies der Endposition der Rückwand 23.

Figur 5 zeigt einen Ausschnitt des in Figur 4 gezeigten Aufgabetrichters 20 mit aufgeklappten Seitenwänden 21, 22. Die Rückwand 23 steht dabei in ihrer in Figur 4 gezeigten aufgeklappten und linear angehobenen Position. Die Führungsbolzen 33 liegen am oberen Ende der Linearführung 32 an. Jeweils eine nicht dargestellte Zugfeder ist zwischen den Führungsbolzen 33 und jeweils einem Federgegenlager 16.4 gespannt. Die Federgegenlager 16.4 sind am Chassis 16 befestigt, vorzugsweise angeschweißt. Die Zugfedern sind in den in die Führungsbolzen 33 eingeformten Nuten gehalten. Seitlich der Nuten sind die Führungsbolzen 33 von Bohrungen 33.2 zur Aufnahme von Sicherungssplinten durchdrungen. Diese legen die Führungsbolzen 33 axial fest.

In der angehobenen Position der Rückwand 23 ist eine Kolbenstange 41 bis zum Anschlag der rotatorischen und der translatorischen Bewegung der Rückwand 23 aus einem Zylinder 42 des Aktuators 40 ausgefahren. Am Ende der Kolbenstange 41 ist eine erste Montageöse 41.1 angebracht. Ein erster Bolzen 44 ist durch die erste Montageöse 41.1 und durch dazu in Deckung stehende Bohrungen in dem rückseitigen Aktuatorlager 23.2 geführt. Der erste Bolzen 44 bildet eine gelenkige Verbindung zwischen dem ersten Aktuator 40 und der Rückwand 23. Axial ist der erste Bolzen 44 durch einen ersten Splint 44.1 gesichert. An dem Zylinder 42 des ersten Aktuators 40 ist eine zweite Montageöse 42.1 befestigt. Ein zweiter Bolzen 45 verbindet die zweite Montageöse 42.1 drehbar mit dem rückseitigen Aktuatorgegenlager 16.3. Der zweite Bolzen 45 ist axial durch einen zweiten Splint 45.1 festgelegt.

Zur Begrenzung der Aufrichtbewegung der Rückwand 23 ist ein Anschlag 43 am Chassis verwendet, wie dies Figur 3 zeigt. An diesem Anschlag 43 schlägt ein Gegenanschlag der Rückwand 23 an.

Zwischen den äußeren Strebenpaaren 23.4 ist jeweils eine Buchse 23.7 angeordnet. Die Seitenwände 21, 22 sind durch die zweiten Aktuatoren 50 in ihre Arbeitsstellung geschwenkt. Dazu sind die Seitenwände 21, 22 auf Drehlagern 22.5 gelagert. Die zweiten Aktuatoren 50 sind an seitlichen Aktuatorlagern 22.4 um in Richtung der Längserstreckung der Seitenwände 21, 22 ausgerichtete Drehachsen drehbar gelagert. Die Linearbewegung der zweiten Aktuatoren 50 wird so in Drehbewegungen der Seitenwände 21, 22 umgewandelt. Jeder Seitenwand 21, 22 ist ein zweiter Aktuator 50, vorzugsweise in Form eines Hydraulikzylinders, zugeordnet. Die Stützstreben 24 sind mittels oberen Querbolzen 24.2 ebenfalls schwenkbar mit oberen Stützenaufnahmen 22.3 verbunden. In der gezeigten Arbeitsstellung der Seitenwände 21, 22 sind die zweiten Aktuatoren 50 jeweils von dem U-förmigen Profil zugeordneter Stützstreben 24 nach außen abgeschirmt. Wie zu Figur 1 gezeigt, sind die Stützstreben 24 gegenüberliegend zu den oberen Stützenaufnahmen 22.3 über die unteren Stützenaufnahmen 16.1 mit dem Chassis 16 verbunden. Die Rückseite der Seitenwände 21, 22 sind mit Versteifungsstreben 22.6 verstärkt. Durch diesen Aufbau können hohe Kräfte, wie sie durch das in den Aufgabetrichter eingebrachte Material übertragen werden können, sicher abgefangen und an das Chassis weitergeleitet werden.

Die Verschlüsse 60 sind in dem gezeigten Ausführungsbeispiel aus jeweils einem Verschlusseinsatz 61 und einer Verschlussaufnahme 62 gebildet. Dabei sind die Verschlusseinsätze 61 der Rückwand 23 und die Verschlussaufnahmen 62 den Seitenwänden 21, 22 zugeordnet. Die Verschlusseinsätze 61 sind seitlich des umgebogenen Randes 23.6 angeordnet. Dazu ist der Rand 23.6 an den gegenüberliegenden Seiten der Rückwand 23 nicht vollständig abgebogen. An so gebildeten Halteabschnitten 61.3 ist jeweils ein Fuß 61.1, der eine Kugel 61.2 trägt, befestigt. Der Halteabschnitt 61.3, der Fuß 61.1 und die Kugel 61.2 sind vorzugsweise miteinander verschweißt. In der aufgeklappten und linear angehobenen Stellung der Rückwand 23 und der aufgeklappten Stellung der Seitenwände 21, 22 sind die Verschlusseinsätze 61 mit den Kugeln 61.2 in Richtung der Verschlussaufnahmen 62 ausgerichtet. Den Verschlussaufnahmen 62 sind jeweils eine Aufnahmepfanne 62.1, ein Führungselement 62.2 und ein Halteprofil 62.3 zugeordnet. Die Halteprofile 62.3 sind mit der jeweiligen Seitenwand 21, 22 verbunden, vorzugsweise verschweißt. Sie tragen die Aufnahmepfannen 62.1. Diese sind in Richtung der Kugeln 61.2 der Verschlusseinsätze 61 geöffnet ausgerichtet. Ihre Innenkonturen sind an die Außenkonturen der Kugeln 61.2 angepasst. Die Führungselemente 62.2 sind an den von den Seitenwänden 21, 22 abgewandten Enden der Halteprofile 62.3 angeordnet. Sie sind vorzugsweise mit einem Halteprofil 62.3 oder dem Rand einer Aufnahmepfanne 62.1 verbunden, insbesondere verschweißt. Sie bilden jeweils eine schräg verlaufende Führungsfläche aus, welche zu der Aufnahmepfanne 62.1 hin ausgerichtet ist.

In der angehobenen Position der Rückwand 23 sind die Verschlusseinsätze 61 unmittelbar oberhalb der Verschlussaufnahmen 62 angeordnet. Die Rückwand 23 ist dabei so weit angehoben, dass die Verschlusseinsätze 61, vorliegend die Kugeln 61.2, bei einer Schwenkbewegung der Rückwand 23 in ihre Transportposition über den oberen Rand der Führungselemente 62.2 geführt sind.

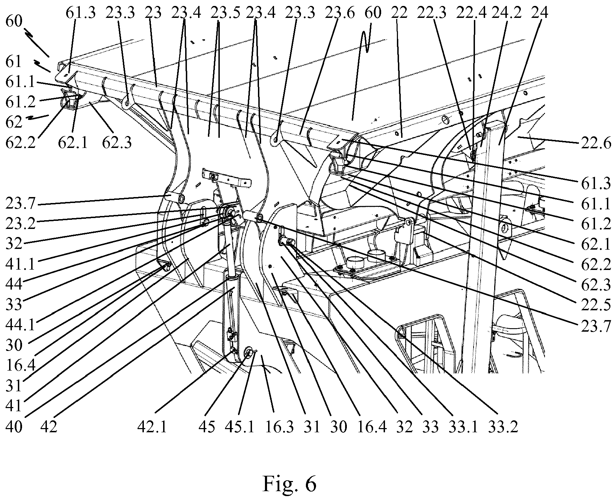

Figur 6 zeigt den in Figur 5 gezeigten Ausschnitt des Aufgabetrichters 20 mit abgesenkter Rückwand 23. Der Aufgabetrichter 20 befindet sich jetzt in seiner endgültigen Arbeitsstellung. Die Verschlusseinsätze 61 der Verschlüsse 60 sind in die Verschlussaufnahmen 62 eingeführt und dort festgelegt. Dadurch ist eine belastbare Verbindung zwischen den Seitenwänden 21, 22 und der Rückwand 23 hergestellt. Die Verschlusseinsätze 61 sind durch die auf die Rückwand 23 wirkende Gewichtskraft in den Verschlussaufnahmen 62 gehalten. Zusätzlich sichernd können auch Zugfedern eingesetzt sein, die die Verschlusseinsätze 61 spannen. Diese Zugfedern können insbesondere von der oder den oben beschriebenen Federn gebildet sein, die zwischen den Bolzen 33 und dem Lager 16.4 gespannt sind. Weiterhin hält darüber hinaus auch der Aktuator 40,50 die Rück-/Seitenwand 21,2 20,23 in Position. Die Seitenwände 21, 22 sind durch die Stützstreben 24 gegenüber dem Chassis 16 abgestützt. Die Seitenwände 21, 22 und die Rückwand 23 sind daher sicher und ohne erforderliche Stützwirkung durch die Aktuatoren 40, 50 in ihren Arbeitsstellungen gehalten. Zu bearbeitendes Material kann so über den Arbeitstrichter 20 der Vibrations- Aufgaberinne 11.1 zugeführt werden. Die in den Figuren 2, 3 und 4 gezeigten Einleitbleche 21.1, 22.1 der Seitenwände 21, 22 umgreifen die Seitenschienen 11.2 der Vibrations-Aufgaberinne 11.1. Der an der Rückwand 23 angeordnete Abschluss 23.1 schließt die Vibrations-Aufgaberinne 11.1 gegenüberliegend zur Vorabsiebung 12 ab. Die zur Rückwand 23 weisenden Abkantungen 21.2, 22.2 der Seitenwände 21, 22 überdecken jeweils den Spalt zwischen der Rückwand 23 und den Seitenwänden 21, 22. Das dem Aufgabetrichter 20 zugeführte Material wird somit nahezu vollständig der Vibrations-Aufgaberinne 11.1 und damit dem weiteren Verarbeitungsprozess zugeführt.

Um von der in Figur 5 gezeigten angehobenen Position der Rückwand 23 in die in Figur 6 gezeigte Arbeitsstellung zu gelangen, wird der erste Aktuator 40 entsprechend eingefahren. Die nicht dargestellten, an den Führungsbolzen 33 angreifenden Zugfedern übertragen eine in Richtung der Längserstreckung der Linearführung 32 wirkende Kraft auf die Führungsbolzen 33 und damit auf die Rückwand 23. Dies führt, bezogen auf die durch die erste Montageöse 41.1 und den ersten Bolzen 44 gebildete Drehachse, zu einem Drehmoment. Das Drehmoment wirkt in Schließrichtung der Rückwand 23. Es wirkt somit dem durch die Schwerkraft der Rückwand 23 hervorgerufenen Drehmoment entgegen. Beim Einfahren des Aktuators 40 aus der angehobenen Position der Rückwand 23 wird diese somit linear in der Linearführung 32 verschoben. Die transversale Bewegung erfolgt so lange, bis die Verschlusseinsätze 61 in den Verschlussaufnahmen 62 festgesetzt sind. Beim Absenken werden die Verschlusseinsätze 61 durch die schräg angeordneten Führungselemente 62.2 in Richtung der Seitenwände 21, 22 geleitet. Die Seitenwände 21, 22 und die Rückwand 23 werden so durch die Verschlüsse 60 fest zusammengezogen. Die Führungselemente 62.2 gleichen weiterhin beim Absenken der Rückwand 23 Toleranzen in der Positionierung der Verschlusseinsätze 61 gegenüber den Verschlussaufnahmen 62 aus. Die Verschlüsse 60 sind durch die Führungselemente 62.2, die Formgebung der Verschlusseinsätze 61 und der dazu korrespondierenden Verschlussaufnahmen 62 selbstzentrierend ausgeführt. Vorliegend erfolgt die Selbstzentrierung durch die Kugeln 61.2, welche beim Absenken der Rückwand 23 selbstständig zum tiefsten Punkt der Aufnahmepfannen 62.1 geführt werden. Alternativ zu den Kugeln 61.2 und den Aufnahmepfannen 62.1 können auch andere geometrische Formen vorgesehen sein. So können stumpfe oder spitze Kegel oder Körper mit sonstigen abgerundeten, beispielsweise parabolischen, Außenkonturen als Verschlusseinsatz 61 mit dazu korrespondierenden Verschlussaufnahmen 62 vorgesehen sein.

Zum Einklappen der Trichterwände von der Arbeitsstellung in die Transportstellung wird zunächst die Rückwand 23 mit dem hinteren ersten Aktuator 40 angehoben. Durch die angehobene Rückwand 23 sind die Verschlüsse 60 zwischen der Rückwand 23 und den Seitenwänden 21, 22 gelöst. Im nächsten Schritt können so die Seitenwände 21, 22 mit Hilfe der zweiten Aktuatoren 50 in ihre in Figur 2 gezeigte Transportposition geklappt werden. Zuvor werden die Stützstreben 24 von den unteren Stützenaufnahmen 16.1 am Chassis 16 gelöst. Anschließend wird die Rückwand 23 linear abgesenkt, bis die Führungsbolzen 33 am unteren Ende der Linearführungen 32 des Umlenkgliedes anstoßen. Der sich weiter zusammenschiebende erste Aktuator 40 bewirkt ab dann ein Drehmoment, welches um die durch die Führungsbolzen 33 gebildete Drehachse ausgerichtet ist. Die Rückwand 23 schwenkt dadurch in ihre Transportposition.

Das dargestellte Ausführungsbeispiel zeigt eine Anordnung, bei welcher die Rückwand 23 translatorisch und rotatorische beweglich in dem Umlenkglied gelagert ist. Alternativ dazu kann es auch vorgesehen sein, dass die Seitenwände 21, 22 entsprechend in Umlenkgliedern gelagert sind und somit sowohl die rotatorische wie auch die translatorische Bewegung ausführen können. Die Rückwand 23 ist dann vorzugsweise so gelagert, dass sie lediglich eine Schwenkbewegung ausführen kann. Der Öffnungs- und Schließvorgang der Verschlüsse erfolgt dann analog zu den beschriebenen Abläufen, wobei die Bewegungsabläufe der Seitenwände 21, 22 und der Rückwand 23 sowie die Anordnung der Verschlusseinsätze 61 und Verschlussaufnahmen 62 getauscht sind.

## Patentansprüche

1. Aufgabeeinheit (11) einer Material-Verarbeitungseinrichtung (10) mit einem Aufgabetrichter (20) mit zumindest einer schwenkbar gelagerten Seitenwand (21, 22) und mit einer schwenkbar gelagerten Rückwand (23), wobei die Seitenwand (21, 22) und die Rückwand (23) mittels Aktuatoren (40, 50) zwischen einer abgeklappten Transportstellung und einer aufgeklappten Arbeitsstellung schwenkbar sind, wobei in der Arbeitsstellung mindestens eine Seitenwand (21, 22) mit der Rückwand (23) mittels zumindest eines lösbaren Verschlusses (60) verbunden ist und wobei der Verschluss (60) mittels einer Bewegung der Seitenwand (21, 22) oder der Rückwand (23) verriegelbar oder entriegelbar ist,
**dadurch gekennzeichnet,**
**dass** jeweils ein erster Aktuator (40) zur Verstellung der Rückwand (23) und ein zweiter Aktuator (50) zur Verstellung der Seitenwand (21, 22) vorgesehen ist und dass zumindest ein Umlenkglied vorgesehen ist, welches die Bewegung des ersten Aktuators (40) während eines Teilabschnitts der Bewegung in eine rotatorische Bewegung der Rückwand (23) und während eines weiteren Teilabschnitts in eine translatorische Bewegung der Rückwand (23) umwandelt oder dass das Umlenkglied die Bewegung des zweiten Aktuators (50) während eines Teilabschnitts der Bewegung in eine rotatorische Bewegung der Seitenwand (21, 22) und während eines weiteren Teilabschnitts in eine translatorische Bewegung der Seitenwand (21, 22) umwandelt.

2. Aufgabeeinheit (11) nach Anspruch 1, **dadurch gekennzeichnet, dass** das Umlenkglied eine Linearführung (32) aufweist, in welcher die Rückwand (23) oder die Seitenwand (21, 22) linear beweglich und drehbar gelagert ist.

3. Aufgabeeinheit (11) nach Anspruch 2, **dadurch gekennzeichnet, dass** der Aktuator (40, 50) derart drehbar mit der Rückwand (23) oder der Seitenwand (21, 22) verbunden ist, dass eine lineare Verstellrichtung des Aktuators (40, 50) seitlich beabstandet zu einer Drehachse der Rückwand (23) oder der Seitenwand (21, 22) ausgerichtet ist und dass eine Kraftkomponente der von dem Aktuator (40, 50) auf die Rückwand (23) oder die Seitenwand (21, 22) übertragenen Kraft in Richtung der Linearführung (32) ausgerichtet ist.

4. Aufgabeeinheit (11) nach einem der Ansprüche 2 oder 3, **dadurch gekennzeichnet, dass** die Linearführung (32) in ihrer Längserstreckung in Richtung einer Komponente der wirkenden Schwerkraft ausgerichtet ist.

5. Aufgabeeinheit (11) nach einem der Ansprüche 1 bis 4, **dadurch gekennzeichnet, dass** der Verschluss (60) aus einer Verschlussaufnahme (62) und einem Verschlusseinsatz (61) gebildet ist und dass durch die translatorische Bewegung der Rückwand (23) oder der Seitenwand (21, 22) der Verschlusseinsatz (61) zum Verriegeln der Rückwand (23) mit der Seitenwand (21. 22) in Richtung einer Komponente der Schwerkraft in den Verschlusseinsatz (61) einführbar und zum Entriegeln entgegen der Komponente der Schwerkraft aus der Verschlussaufnahme (62) anhebbar ist.

6. Aufgabeeinheit (11) nach Anspruch 5, **dadurch gekennzeichnet, dass** die Verschlussaufnahme (62) und der Verschlusseinsatz (61) selbstzentrierend zueinander ausgebildet sind, insbesondere dass die Verschlussaufnahme (62) als teil-, insbesondere halbkugelförmige Pfanne, und der Verschlusseinsatz (61) als Kugel oder Kugelabschnitt ausgeführt sind oder dass der Verschlusseinsatz (61) als Kegel und die Verschlussaufnahme (61) als kegelförmige Aufnahme ausgebildet sind.

7. Aufgabeeinheit (11) nach Anspruch 5 oder 6, **dadurch gekennzeichnet, dass** der Verschlussaufnahme (62) ein über die Verschlussaufnahme (62) hervorstehendes Führungselement (62.2) zugeordnet ist und dass das Führungselement (62) eine geneigt zur Linearbewegung des Verschlusseinsatzes (61) und zur Verschlussaufnahme (62) hin verlaufende Führungsfläche aufweist.

8. Aufgabeeinheit (11) nach einem der Ansprüche 1 bis 7, **dadurch gekennzeichnet, dass** an der in dem Umlenkglied gelagerten Rückwand (23) oder Seitenwand (21, 22) ein Federelement derart angreift, dass ein in Richtung der Arbeitsstellung wirkendes Drehmoment auf die Rückwand (23) oder die Seitenwand (21, 22) übertragen wird.

9. Aufgabeeinheit (11) gemäß Anspruch 8, soweit abhängig von einem der Ansprüche 2 bis 7, **dadurch gekennzeichnet, dass** die Rückwand (23) oder die Seitenwand (21, 22) mittels eines Führungsbolzens (33) in der Linearführung (32) gelagert ist und dass das Federelement an dem Führungsbolzen (33) derart angekoppelt ist, dass eine in Richtung der Längserstreckung der Linearführung (32) gerichtete Kraft auf den Führungsbolzen (33) übertragen wird, welche ein um den Montagepunkt des Aktuators (40, 50) an der Rückwand (23) oder der Seitenwand (21, 22) wirkendes Drehmoment erzeugt.

10. Aufgabeeinheit (11) nach einem der Ansprüche 1 bis 9, **dadurch gekennzeichnet, dass** die schwenkbar gelagerte Seitenwand (21, 22) in ihrer aufgeklappten Arbeitsstellung mittels zumindest einer Stützstrebe (24) abgestützt ist und dass die schwenkbar und linear bewegliche Rückwand (23) durch den Verschluss (60) an der Seitenwand (21, 22) gehalten ist oder dass die schwenkbar gelagerte Rückwand (21, 22) in ihrer aufgeklappten Arbeitsstellung mittels zumindest einer Stützstrebe (24) abgestützt ist und dass die schwenkbar und linear bewegliche Seitenwand (21, 22) durch den Verschluss (60) an der Rückwand (23) gehalten ist.

11. Aufgabeeinheit (11) nach Anspruch 10, **dadurch gekennzeichnet, dass** die Stützstrebe (24) ein U-förmiges Profil aufweist und dass in der Arbeitsstellung des Aufgabetrichters (40) zumindest einer der Aktuatoren (40, 50) zumindest teilweise von der Stützstrebe (24) umgeben ist.

12. Aufgabeeinheit (11) nach einem der Ansprüche 1 bis 11, **dadurch gekennzeichnet, dass** der Verschluss (60) zwischen den in Arbeitsstellung oberen einander zugewandten Enden der Rückwand (23) und der Seitenwand (21, 22) angeordnet ist.

## Claims

1. A charging unit (11) of a material processing device (10) comprising a charging hopper (20) having at least one pivotably mounted side wall (21, 22) and having a pivotably mounted rear wall (23), wherein the side wall (21, 22) and the rear wall (23) are able to be pivoted between a folded-down transport position and a folded-out working position by means of actuators (40, 50), wherein at least one side wall (21, 22) is connected in the working position to the rear wall (23) by means of at least one releasable closure (60), and wherein the closure (60) is able to be locked or unlocked by moving the side wall (21, 22) or the rear wall (23),
**characterised in that**
in each case a first actuator (40) is provided for adjusting the rear wall (23) and a second actuator (50) is provided for adjusting the side wall (21, 22), and **in that** at least one deflection element is provided which converts the movement of the first actuator (40) during a part of the movement into a rotational movement of the rear wall (23) and, during a further part thereof, into a translational movement of the rear wall (23), or **in that** the deflection element converts the movement of the second actuator (50) during a part of the movement into a rotational movement of the side wall (21, 22) and, during a further part thereof, into a translational movement of the side wall (21, 22).

2. The charging unit (11) according to claim 1, **characterised in that** the deflection element has a linear guide (32) in which the rear wall (23) or the side wall (21, 22) is mounted in a linearly movable and rotatable manner.

3. The charging unit (11) according to claim 2, **characterised in that** the actuator (40, 50) is rotatably connected to the rear wall (23) or the side wall (21, 22) in such a way that a linear adjustment direction of the actuator (40, 50) is aligned so as to be laterally spaced from an axis of rotation of the rear wall (23) or the side wall (21, 22), and **in that** a component of the force transmitted from the actuator (40, 50) to the rear wall (23) or the side wall (21, 22) is oriented so as to be in the direction of the linear guide (32).

4. The charging unit (11) according to any one of claims 2 or 3, **characterised in that** the linear guide (32) is oriented in the longitudinal extension thereof in the direction of a component of the acting force of gravity.

5. The charging unit (11) according to any one of claims 1 to 4, **characterised in that** the closure (60) is formed from a closure receptacle (62) and a closure insert (61), and **in that** as a result of the translational movement of the rear wall (23) or the side wall (21, 22) the closure insert (61) can be inserted in the direction of a component of the force of gravity into the closure insert (61) for locking the rear wall (23) to the side wall (21, 22), and can be raised out of the closure receptacle (62) counter to the component of the force of gravity for unlocking.

6. The charging unit (11) according to claim 5, **characterised in that** the closure receptacle (62) and the closure insert (61) are designed so as to be self-centring with respect to one another, in particular **in that** the closure receptacle (62) is configured as a partially spherical socket, in particular a hemispherical socket, and the closure insert (61) is configured as a sphere or spherical portion, or **in that** the closure insert (61) is designed as a cone and the closure receptacle (61) as a conical receptacle.

7. The charging unit (11) according to claim 5 or 6, **characterised in that** a guide element (62.2) protruding over the closure receptacle (62) is associated with the closure receptacle (62), and **in that** the guide element (62) has a guide surface extending in an inclined manner with respect to the linear movement of the closure insert (61) and towards the closure receptacle (62).

8. The charging unit (11) according to any one of claims 1 to 7, **characterised in that** a spring element acts on the rear wall (23) or side wall (21, 22) mounted in the deflection element in such a way that a torque acting in the direction of the working position is transmitted to the rear wall (23) or the side wall (21, 22).

9. The charging unit (11) according to claim 8, when dependent on any one of claims 2 to 7, **characterised in that** the rear wall (23) or the side wall (21, 22) is mounted in the linear guide (32) by means of a guide pin (33), and **in that** the spring element is coupled to the guide pin (33) in such a way that a force directed in the direction of the longitudinal extension of the linear guide (32) is transmitted to the guide pin (33), which force produces a torque acting about the mounting point of the actuator (40, 50) on the rear wall (23) or the side wall (21, 22).

10. The charging unit (11) according to any one of claims 1 to 9, **characterised in that** the pivotably mounted side wall (21, 22) is supported in the folded-out working position thereof by means of at least one support strut (24), and **in that** the pivotably and linearly movable rear wall (23) is held on the side wall (21, 22) by the closure (60), or **in that** the pivotably mounted rear wall (21, 22) is supported in the folded-out working position thereof by means of at least one support strut (24), and **in that** the pivotably and linearly movable side wall (21, 22) is held on the rear wall (23) by the closure (60).

11. The charging unit (11) according to claim 10, **characterised in that** the support strut (24) has a U-shaped profile, and **in that** in the working position of the charging hopper (40) at least one of the actuators (40, 50) is at least partially surrounded by the support strut (24).

12. The charging unit (11) according to any one of claims 1 to 11, **characterised in that** the closure (60) is arranged between the upper ends of the rear wall (23) and the side wall (21, 22) which face one another in the working position.

## Revendications

1. Unité d'alimentation (11) d'un dispositif de traitement de matériaux (10) comprenant une trémie d'alimentation (20) avec au moins une paroi latérale (21, 22) montée pivotante et avec une paroi arrière (23) montée pivotante, la paroi latérale (21, 22) et la paroi arrière (23) pouvant pivoter entre une position de transport rabattue et une position de travail dépliée au moyen d'actionneurs (40, 50), en position de travail au moins une paroi latérale (21, 22) étant reliée à la paroi arrière (23) au moyen d'au moins une fermeture amovible (60), et la fermeture (60) pouvant être verrouillée ou déverrouillée en déplaçant la paroi latérale (21, 22) ou la paroi arrière (23),
**caractérisée en ce**
**qu'**un premier actionneur (40) pour régler la paroi arrière (23) et un second actionneur (50) pour régler la paroi latérale (21, 22) sont prévus, et **en ce qu'**au moins un élément de déviation est prévu qui convertit le mouvement du premier actionneur (40) pendant une section du mouvement en un mouvement de rotation de la paroi arrière (23) et pendant une autre section en un mouvement de translation de la paroi arrière (23) ou **en ce que** l'élément de déviation convertit le mouvement du second actionneur (50) pendant une section du mouvement en un mouvement de rotation de la paroi latérale (21, 22) et pendant une autre section en un mouvement de translation de la paroi latérale (21, 22).

2. Unité d'alimentation (11) selon la revendication 1, **caractérisée en ce que** l'élément de déviation présente un guide linéaire (32) dans lequel la paroi arrière (23) ou la paroi latérale (21, 22) est montée mobile de façon linéaire et de manière à pouvoir pivoter.

3. Unité d'alimentation (11) selon la revendication 2, **caractérisée en ce que** l'actionneur (40, 50) est relié en rotation à la paroi arrière (23) ou à la paroi latérale (21, 22) de telle sorte qu'une direction de réglage linéaire de l'actionneur (40, 50) soit orientée latéralement espacée d'un axe de rotation de la paroi arrière (23) ou de la paroi latérale (21, 22) et **en ce qu'**une composante de force de la force transmise de l'actionneur (40, 50) à la paroi arrière (23) ou à la paroi latérale (21, 22) est orientée en direction du guide linéaire (32).

4. Unité d'alimentation (11) selon l'une quelconque des revendications 2 ou 3, **caractérisée en ce que** le guide linéaire (32) est orienté dans sa direction longitudinale en direction d'une composante de la gravité agissante.

5. Unité d'alimentation (11) selon l'une quelconque des revendications 1 à 4, **caractérisée en ce que** la fermeture (60) est formée d'un réceptacle de fermeture (62) et d'un insert de fermeture (61) et **en ce que**, par le mouvement de translation de la paroi arrière (23) ou de la paroi latérale (21, 22), l'insert de fermeture (61) peut être inséré dans l'insert de fermeture (61) pour le verrouillage de la paroi arrière (23) avec la paroi latérale (21, 22) en direction d'une composante de gravité et retiré du réceptacle de fermeture (62) pour le déverrouillage à l'encontre de la composante de gravité.

6. Unité d'alimentation (11) selon la revendication 5, **caractérisée en ce que** le réceptacle de fermeture (62) et l'insert de fermeture (61) sont conçus pour être autocentrés l'un par rapport à l'autre, en particulier **en ce que** le réceptacle de fermeture (62) est conçu comme une cupule partiellement sphérique, en particulier hémisphérique, et **en ce que** l'insert de fermeture (61) est conçu comme une bille ou une section de bille ou **en ce que** l'insert de fermeture (61) est conçu comme un cône et le réceptacle de fermeture (61), comme un réceptacle conique.

7. Unité d'alimentation (11) selon la revendication 5 ou 6, **caractérisée en ce que** le réceptacle de fermeture (62) est doté d'un élément de guidage (62.2) dépassant du réceptacle de fermeture (62) et **en ce que** l'élément de guidage (62) présente une surface de guidage s'étendant de manière inclinée vers le mouvement linéaire de l'insert de fermeture (61) et vers le réceptacle de fermeture (62).

8. Unité d'alimentation (11) selon l'une quelconque des revendications 1 à 7, **caractérisée en ce qu'**un élément à ressort vient en prise sur la paroi arrière (23) ou la paroi latérale (21, 22) montée dans l'élément de déviation de telle sorte qu'un couple agissant en direction de la position de travail soit transmis à la paroi arrière (23) ou à la paroi latérale (21, 22).

9. Unité d'alimentation (11) selon la revendication 8, dans la mesure où elle dépend de l'une des revendications 2 à 7, **caractérisée en ce que** la paroi arrière (23) ou la paroi latérale (21, 22) est montée dans le guide linéaire (32) au moyen d'une broche de guidage (33) et **en ce que** l'élément de ressort est couplé à la broche de guidage (33) de manière à ce qu'une force dirigée en direction de l'extension longitudinale du guide linéaire (32) soit transmise à la broche de guidage (33), laquelle force produit un couple agissant sur la paroi arrière (23) ou sur la paroi latérale (21, 22) par le point de montage de l'actionneur (40, 50).

10. Unité d'alimentation (11) selon l'une quelconque des revendications 1 à 9, **caractérisée en ce que** la paroi latérale (21, 22) montée pivotante est supportée dans sa position de travail dépliée au moyen d'au moins un montant de support (24) et **en ce que** la paroi arrière (23) pivotante et mobile linéairement est maintenue par la fermeture (60) sur la paroi latérale (21, 22) ou **en ce que** la paroi arrière (21, 22) montée pivotante est supportée dans sa position de travail dépliée au moyen d'au moins un montant de support (24) et **en ce que** la paroi latérale (21, 22) pivotante et mobile linéairement est maintenue sur la paroi arrière (23) par la fermeture (60).

11. Unité d'alimentation (11) selon la revendication 10, **caractérisée en ce que** le montant de support (24) présente un profil en forme de U et **en ce qu'**en position de travail de la trémie d'alimentation (40) au moins un des actionneurs (40, 50) est au moins partiellement entouré du montant de support (24).

12. Unité d'alimentation (11) selon l'une quelconque des revendications 1 à 11, **caractérisée en ce que** la fermeture (60) est disposée entre les extrémités de la paroi arrière (23) et la paroi latérale (21, 22), qui se font face vers le haut en position de travail.
